# EUROPÄISCHE PATENTSCHRIFT

(11) **EP 3 210 308 B1**
(45) Veröffentlichungstag und Bekanntmachung des Hinweises auf die Patenterteilung: **22.05.2024**
(21) Anmeldenummer: 15781912.9
(22) Anmeldetag: 19.10.2015
(51) Int. Cl.: H04B 1/525, H04B 1/48, H04B 1/3822, H04B 1/16, H04B 1/18, H04B 1/3805

(54) **ABGESETZTE ANTENNENEINRICHTUNG ZUR FAHRZEUG-ZU-FAHRZEUG (C2C) ODER FAHRZEUG-ZU-X (C2X) KOMMUNIKATION**
REMOTE ANTENNA DEVICE FOR CAR-TO-CAR (C2C) OR CAR-TO-X (C2X) COMMUNICATION
DISPOSITIF D'ANTENNE À DISTANCE POUR COMMUNICATION DE VÉHICULE À VÉHICULE (C2C) OU DE VÉHICULE À X (C2X)

(30) Priorität: 20.10.2014 DE 102014115254
(43) Veröffentlichungstag der Anmeldung: 30.08.2017
(73) Patentinhaber: Hirschmann Car Communication GmbH, 72654 Neckartenzlingen (DE)
(72) Erfinder: LANGBEIN, Christian, 72663 Großbettlingen (DE); STORCH, Florian, 36093 Künzell (DE); FAUST, Michael, 36137 Großenlüder (DE)
(74) Vertreter: Patentanwaltskanzlei WILHELM & BECK
(86) Internationale Anmeldenummer: PCT/EP2015/074106
(87) Internationale Veröffentlichungsnummer: WO 2016/062651

(56) Entgegenhaltungen:
- EP-A2- 2 983 298
- WO-A2-96/27242
- US-A1- 2011 009 074
- US-A1- 2014 148 214

## Beschreibung

Die Erfindung betrifft eine Antenneneinrichtung sowie ein Verfahren zum Betreiben einer solchen Antenneneinrichtung gemäß den Merkmalen der jeweiligen Oberbegriffe der unabhängigen Patentansprüche.

Bekannte gattungsgemäße Antenneneinrichtungen und Verfahren zum Betreiben dieser Antenneneinrichtungen sind für die Anwendung im Fahrzeugbereich geeignet und ausgebildet.

Bei einer bekannten Ausführungsform einer Antenneneinrichtung weist diese eine Antenne auf, wobei die Antenne über ein Antennenkabel mit einem elektronischen Gerät verbunden ist. Über das Antennenkabel werden hochfrequente Signale, die von der Antenne empfangen worden sind, zum dem elektronischen Gerät übertragen, dort aufbereitet und in gewünschter Weise wiedergegeben. Hierbei handelt es sich beispielsweise um Audio- und Videosignale, die mittels geeigneter Wiedergabegeräte im Fahrzeug wiedergegeben werden. Gleiches gilt für Navigationssignale. Es sind auch Antenneneinrichtungen bekannt, bei denen der umgekehrte Signalübertragungsweg beschritten wird. Hierbei handelt es sich beispielsweise um Telefonsignale, die von dem elektronischen Gerät über das Antennenkabel an die Antenne übertragen und dort abgestrahlt werden.

Es ist für den optimalen Empfang bzw. die optimale Aussendung von hochfrequenten Signalen erforderlich, dass die Antenne außerhalb des Fahrzeuges angeordnet ist. Hingegen ist das elektronische Gerät an einem weiter davon entfernten Ort innerhalb des Fahrzeuges angeordnet, sodass es erforderlich ist, ein langes Antennenkabel zwischen elektronischem Gerät und der Antenne bereitzustellen und zu verlegen.

Bei aktiven Antennen ist es weiterhin erforderlich, eine Stromversorgung vorzusehen, wozu ebenfalls ein zusätzlich zu dem Antennenkabel vorzusehendes Stromversorgungskabel erforderlich ist. Soll noch eine Diagnose der aktiven Antenne durchgeführt werden, ist es weiterhin erforderlich, ein drittes Diagnosekabel von einem zusätzlichen Diagnosegerät oder auch von dem elektronischen Gerät zu der aktiven Antenne zu verlegen.

Diese Vielzahl von Kabeln erfordert einen hohen Materialaufwand und einen hohen Montageaufwand.

Außerdem sind bekannte aktive Antennen von Fahrzeugen nicht dazu geeignet und ausgebildet, eine Fahrzeug-zu-Fahrzeug- (C2C) oder Fahrzeug-zu-X-Kommunikation (C2X) durchzuführen.

Die US 2011/0009074 A1 beschreibt ein System zur Nutzung einer einzelnen Antenne durch eine Mehrzahl von Modulen zur drahtlosen Kommunikation.

Die EP 2 983 298 A2 beschreibt ein Kompensatormodul, dass mittels eines Antennenkabels mit einer Sende-/Empfangseinheit verbunden werden kann. Über das Antennenkabel überträgt das Kompensatormodul einen die Ausgangsleistung kennzeichnenden Parameter.

Die US 2014/0148214 A1 beschreibt eine abgesetzte Antenneneinheit, die über ein Antennenkabel mit einer Sendeeinheit verbunden werden kann. Über das Antennenkabel werden zusätzlich zu dem Nutzsignal auch Umschaltsignale und ein Rückkopplungssignal übertragen.

Der Erfindung liegt daher die Aufgabe zugrunde, eine Antenneneinrichtung und ein Verfahren zum Betreiben einer solchen Antenneneinrichtung bereitzustellen, die einfach aufgebaut ist, die einfach betrieben werden kann und die eine Fahrzeug-zu-Fahrzeug- oder Fahrzeug-zu-X-Kommunikation ermöglicht.

Diese Aufgabe ist durch die Merkmale der unabhängigen Patentansprüche gelöst.

Hinsichtlich der Ausgestaltung der Antenneneinrichtung ist erfindungsgemäß vorgesehen, dass die Antenneneinrichtung eine Steuereinheit sowie Schalteinheiten, die von der Steuereinheit angesteuert werden, aufweist, wobei mittels der Schalteinheiten zwischen einem Empfangspfad und einem Sendepfad zwischen dem elektronischen Gerät und der Antenne umgeschaltet wird.

Die Erfindung nutzt den Gedanken, dass sowohl für den Betrieb, die Kommunikation und die Diagnose und gegebenenfalls weitere Dienste die hierfür erforderlichen hochfrequenten Signale nur noch über ein einziges Kabel, nämlich das Antennenkabel, zwischen dem elektronischen Gerät und der Antenne übertragen werden. Je nach Art der zu übertragenden hochfrequenten Signale werden diese unverändert über das Antennenkabel übertragen (wobei es sich hierbei um die Nutzsignale, die empfangen oder abgestrahlt werden sollen, handelt), oder die für die Steuerung bzw. Diagnose und gegebenenfalls weitere Zwecke auf das Antennenkabel aufmoduliert werden. Auch eine Stromversorgung der Antenneneinrichtung, die abgesetzt ist von dem elektronischen Gerät, erfolgt über das Antennenkabel.

Je nachdem, ob hochfrequente Signale von der Antenne empfangen und an das elektronische Gerät weitergeleitet werden sollen oder ob hochfrequente Signale von dem elektronischen Gerät an die Antenne übertragen und dort abgestrahlt werden sollen, wird durch entsprechende Schalteinheiten zwischen einem Empfangspfad und einem Sendepfad umgeschaltet. Dies hat den Vorteil, dass im dem Empfangspfad bzw. dem Sendepfad je nach Verwendungszweck weitere elektronische Einheiten, wie zum Beispiel Verstärker, zwischengeschaltet können.

Damit werden die Signalverarbeitung und der Signalweg entweder von dem elektronischen Gerät zu der Antenne (Sendepfad) oder von der Antenne zu dem elektronischen Gerät (Empfangspfad) optimiert. So ist in dem Empfangspfad als Verstärker ein rauscharmer Verstärker zwischengeschaltet, der sich schaltungstechnisch durch besondere Rauscharmut auszeichnet, um extrem schwache Signale, die von der Antenne empfangen worden sind, zu verstärken, ohne dass dabei gleichzeitig das gesamte Frequenzband in tiefere Frequenzen umgesetzt werden muss. Dadurch erhöht sich die Performance der Antenneneinrichtung ganz wesentlich. Gleiches gilt für die Signalübertragung von dem elektronischen Gerät bis hin zu der Antenne, wozu in den Sendepfad ein Leistungsverstärker zwischengeschaltet ist. Das bedeutet, dass mittels des Leistungsverstärkers auf einem kurzen Wege, bevor die Signale über die Antenne abgestrahlt werden, eine Signalverstärkung erfolgt, um auch dadurch die Performance der Antenneneinrichtung hinsichtlich ihrer Aussendung deutlich verbessert. Von besonderem Vorteil ist es, dass die Antenneneinrichtung zum Empfangen und Senden von Signalen in der Fahrzeug-zu-Fahrzeug- oder der Fahrzeug-zu-X-Kommunikation (X= externe Einrichtungen wie Laptops, Smartphones, aber auch externe Einrichtungen außerhalb des Fahrzeuges wie zum Beispiel Verkehrssteuerungsanlagen, Stauerfassungseinheiten, Ampeln und so weiter) nach dem Kommunikations-Standard 802.11p ausgebildet ist. Dieser Standard ist speziell auf die mobile Anwendung von solchen Antenneneinrichtungen in Fahrzeugen geeignet. Dadurch kann aufgrund der Standardisierung zwischen jedem Fahrzeug und jedem beliebigen Fahrzeug oder jeder beliebigen weiteren Einrichtung ein Kommunikationspfad (das heißt eine Signalübertragung von hochfrequenten Signalen) hergestellt werden.

An der Steuereinheit ist eine Sende-Empfangseinheit angeschlossen, die ausgangsseitig mit dem Antennenkabel verbunden ist. Hierdurch ist es möglich, bestimmte Dienste bzw. Aktionen, die zwischen dem Fahrzeug und einer externen Einrichtung oder einem anderen Fahrzeug ausgelöst werden sollen, zu steuern. So kann beispielsweise ausgelöst von dem elektronischen Gerät ein Signal auf das Antennenkabel aufmoduliert werden, welches an die Steuereinheit über die Sende-Empfangseinheit übertragen wird und die Steuereinheit dazu veranlassen, über die Sende-Empfangseinheit ein weiteres Signal auf dem Antennenkabel aufzumodulieren, welches dann über den Sendepfad an die Antenne abgegeben wird. Hierzu ist die Steuereinheit in der Lage, für den Fall, dass das die Sende-Empfangseinheit verlassende Signal, welches auf das Sendekabel aufmoduliert worden ist, über den Sendepfad an die Antenne zu senden, indem die Schalteinheiten derart betätigt werden, dass der Sendepfad (und nicht der Empfangspfad) durchgeschaltet wird. Ist die Abstrahlung dieses Signals erfolgt, kann, muss aber nicht, wieder auf den Empfangspfad zurückgeschaltet werden. Generell richtet sich die Betätigung der Schalteinheiten durch die Steuereinheit immer danach, ob Signale von der Antenne empfangen und zu dem elektronischen Gerät über das Antennenkabel weitergeleitet werden sollen oder ob Signale von dem elektronischen Gerät oder gegebenenfalls auch von der Steuereinheit selber oder von zumindest einer an der Steuereinheit angeschlossenen weiteren Einheit über den Sendepfad an die Antenne zur Abstrahlung weitergeleitet werden sollen.

An der Steuereinheit ist eine Frequenzerfassungseinheit angeschlossen, die Ausgangsseitig mit dem Antennenkabel verbunden ist. Mittels dieser Frequenzerfassungseinheit werden Steuersignale des elektronischen Gerätes, die auf das Antennenkabel aufmoduliert worden sind, erfasst und ein Steuerimpuls an die Steuereinheit abgegeben. Dieser Steuerimpuls veranlasst die Steuereinheit, die Schalteinheiten zu betätigen, um zwischen Sende- und Empfangspfad umzuschalten. Mittels dieser Frequenzerfassungseinheit werden also Steuersignale erzeugt bzw. erfasst, um in Abhängigkeit von auslösenden Ereignissen in dem elektronischen Gerät bzw. der Antenneneinrichtung die Schalteinheiten zu betätigen, die zwischen Sende- und Empfangspfad umschalten. Diese auslösenden Ereignisse sind solche, dass das elektronische Gerät ein Steuersignal auf das Antennenkabel aufmoduliert, welches der Steuereinheit die Information gibt, auf den Sendepfad umzuschalten, weil von dem elektronischen Gerät hochfrequente Signale über das Antennenkabel an die Antenne zur dortigen Abstrahlung übertragen werden sollen. Gleiches gilt auch für den Fall, dass mittels der Antenneneinrichtung von der Antenne empfangene hochfrequente Signale über den Empfangspfad und das Antennenkabel an das elektronische Gerät übertragen werden sollen.

Mit der erfindungsgemäßen Antenneneinrichtung ist es somit nicht nur möglich, hochfrequente Signale zwischen Antenne und elektronischem Gerät (sogenannte Nutzsignale) zu übertragen, sondern auch Steuersignale, Diagnosesignale, gegebenenfalls eine Stromversorgung und möglicherweise auch weitere Signale auf das Antennenkabel aufzumodulieren und zu übertragen, sodass nur noch dieses Antennenkabel zwischen der Antenneneinrichtung mit seiner Antenne und dem weiter davon entfernten (abgesetzten) elektronischen Gerät zu übertragen. Die Erfindung nutzt also den Effekt aus, dass das Antennenkabel zwischen dem elektronischen Gerät und der Antenne das einzige Übertragungsmedium ist, welches durch verschiedene Arten der Signalübertragung (Nutzsignale, Steuersignale, Diagnosesignale, elektrische Energieübertragung und dergleichen) genutzt wird und somit in vorteilhafter Weise die Verwendung von je einem Kabel für die jeweils genannten Zwecke entfallen kann. Dadurch kann eine aufwendig Verkabelung im Fahrzeug vermieden und die Antenneneinrichtung mit ihrer Antenne, die weit von dem elektronischen Gerät entfernt ist, nur über ein einziges Antennenkabel, im Regelfall in Koaxialkabel, betrieben werden. Dadurch reduziert sich in vorteilhafter Weise sowohl der Material- als auch der Montageaufwand.

In analoger Weise ist in dem weiteren unabhängigem Patentanspruch und den zugehörigen Unteransprüchen ein erfindungsgemäßes Verfahren zum Betreiben einer Antenneneinrichtung angegeben. Hierfür gelten die gleichen Ausführungen und die gleichen Vorteile wie bezüglich der zuvor schon beschriebenen Antenneneinrichtung.

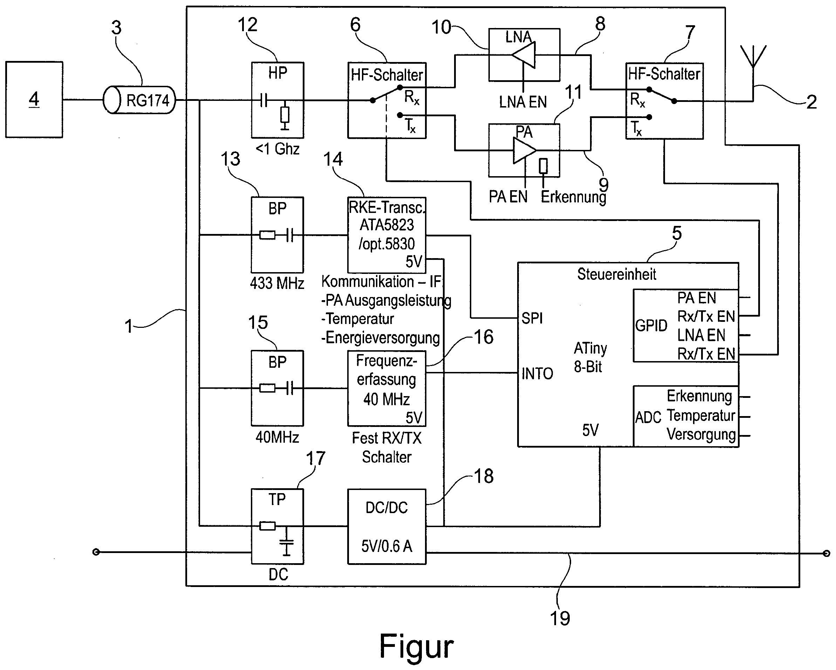

Ein Ausführungsbeispiel einer Antenneneinrichtung, die auch nach dem erfindungsgemäßen Verfahren betrieben werden kann, wird im Folgenden beschrieben und anhand der einzigen Figur erläutert.

Eine Antenneneinrichtung 1 weist, soweit im Einzelnen dargestellt, eine Antenne 2 auf. Die Antenneneinrichtung 1 ist direkt mit der Antenne 2 oder nur über einen sehr kurzen Signalweg verbunden und an einer bestimmten Stelle des Fahrzeuges, im Regelfall außerhalb des Fahrzeuges, angeordnet. Übe rein Antennenkabel 3, vorzugsweise ein Koaxialkabel, wird die Antenneneinrichtung 1 mit einem nur prinzipiell dargestellten elektronischen Gerät 4 verbunden. Dabei ist es wichtig, dass der Einbauort der Antenneneinrichtung 1 und der Einbauort des elektronischen Gerätes 4 deutlich beabstandet voneinander sind. Dieser Abstand liegt je nach Größe des Fahrzeuges im Meterbereich. Daher ist der schon beschriebene Grundgedanke der Erfindung, nämlich ein einziges Antennenkabel 3 zwischen elektronischem Gerät 4 und Antenneneinrichtung 1 einzusetzen, von besonderer Bedeutung.

Innerhalb der Antenneneinrichtung 1 ist eine Steuereinheit 5 (Mikrocontroller) angeordnet, die verschiedene Signaleingänge und Signalausgänge aufweist. Weiterhin sind Schalteinheiten 6, 7 vorhanden, die sich in dem Signalweg zwischen Antenne 2 und elektronischem Gerät 4 befinden, wobei mittels dieser Schalteinheiten 6, 7 zwischen einem Empfangspfad 8 und einem Sendepfad 9 umgeschaltet werden kann. Die Schalteinheiten 6, 7 sind mit der Steuereinheit 5 verbunden, sodass durch einen entsprechenden Schaltimpuls der Steuereinheit 5 die Schalteinheiten 6, 7 betätigt werden. Sie schalten immer gleichzeitig, sodass wie beispielsweise in der Figur dargestellt entweder nur der Empfangspfad 8 (oder nach Umschaltung der Sendepfad 9) durchgeschaltet sind. In den beiden Pfaden 8, 9 sind der Anwendung für den jeweiligen Pfad entsprechend Verstärker 10, 11 zwischengeschaltet. In besonders vorteilhafter Weise ist in dem Empfangspfad 8 ein rauscharmer Verstärker 10 (LNA) zwischengeschaltet und/oder in dem Empfangspfad 9 ein Leistungsverstärker 11 (PA). Einer der beiden Verstärker 10, 11 oder auch beide Verstärker 10, 11 können, müssen aber nicht, mit der Steuereinheit 5 verbunden sein. Sind sie verbunden, so sind der Eingang LNA EN des Verstärkers 10 mit dem entsprechenden Eingang LNA EN der Steuereinheit verbunden. Auch der optional als steuerbarer Verstärker 11 ausgebildete Leistungsverstärker kann über seinen Ausgang PA EN mit dem Eingang PA EN der Steuereinheit 5 verbunden sein.

Außerdem können die beiden Verstärker 10, 11 oder auch nur ein Verstärker (wie in der Figur dargestellt nur der Verstärker 11) mit einer Diagnoseschnittstelle (detect) ausgerüstet sein und über einen entsprechenden Eingang (detect) der Steuereinheit 5 verbunden sein.

Weiterhin ist in dem Übertragungsweg zwischen elektronischen Gerät 4 und Antenne 2 ein Hochpass 12 geschaltet.

Ergänzend dazu ist ein Bandpass 13 vorhanden, der in dem Signalweg zwischen dem Antennenkabel 3 über eine Sende-Empfangseinheit 14 zu der Steuereinheit 5 hin vorhanden ist. Bei der Sende-Empfangseinheit 14 handelt es sich beispielsweise um eine Übertragungseinheit für die Funkzentralverriegelung des Fahrzeuges.

Anhand der Funktionsweise der Funkzentralverriegelung wird der grundsätzliche Gedanke beispielsweise der Fahrzeug zu X (X= Fernbedienung für die Funkzentralverriegelung) beschrieben. Ist der Empfangspfad 8 durchgeschaltet und wird von der Antenne 2 ein Auslösesignal der Fernbedienung für die Funkzentralverriegelung empfangen, wird dieses Signal über den Bandpass 13 und die Sende-Empfangseinheit 14 (Transceiver) an die Steuereinheit 5 weitergeleitet. Dieses Signal wird in der Steuereinheit 5 herausgefiltert, demoduliert und dekodiert und dann über die Sende-Empfangseinheit 14 und den Bandpass 13 wieder auf das Antennenkabel 3 aufmoduliert, von wo aus es an das elektronische Gerät 4 gelangt, um dort eine Aktion (zum Beispiel Türverriegelung oder Türentriegelung) auszulösen. Dieses derart auf das Antennenkabel 3 aufmodulierte Steuersignal kann nicht abgestrahlt werden, da dies von dem Hochpass 12 blockiert wird. Sollte in dem Augenblick, in dem ein Auslösesignal der Funkfernbedienung von der Antenne 2 empfangen worden sein, nicht der Empfangspfad 8, sondern der Sendepfad 9 durchgeschaltet sein, ist es denkbar, dass durch geeignete Art und Weise die Steuereinheit 5 sehr, sehr kurzzeitig immer zwischen Empfangspfad 8 und Sendepfad 9 umschaltet, um auf jeden Fall zu gewährleisten, dass dann, wenn ein hochfrequentes Signal von der Antenne 2 empfangen wird und für diesen Zeitpunkt der Sendepfad 9 durchgeschaltet sein sollte, immer kurzfristig auf den Empfangspfad 8 umgeschaltet wird. Hierfür ist über einen Bandpass 15 eine Frequenzerfassungseinheit 16 mit der Steuereinheit 5 verbunden, die ein schnelles Umschalten der Schalteinheiten 6, 7 sicherstellt. Die Auslösesignale des elektronischen Gerätes 4, ob die Schalteinheiten 6, 7 den Empfangspfad 8 oder den Sendepfad 9 durchschalten sollen, gelangen über den Bandpass 15 zu der Frequenzerfassungseinheit 16, die wiederum an der Steuereinheit 5 angeschlossen ist und entsprechende Steuersignale an die Schalteinheiten 6, 7 zum Umschalten gibt.

Schließlich erfolgt über einen Tiefpass 17 noch eine Stromversorgung 18 der Antenneneinrichtung 1. Die Stromversorgung 18 ist beispielsweise ein Energiespeicher, der über auf das Antennenkabel 3 aufmodulierte Signale geladen wird. Über die Stromversorgung 18 erfolgt die Energieversorgung der aktiven Einheit der Antenneneinrichtung 1, insbesondere deren Steuereinheit 5, deren Sende-Empfangseinheit 14 und deren Frequenzerfassungseinheit 16.

Wie dem Schaltbild der Figur zu entnehmen ist, wird durch entsprechend abgestimmte Filter (Hochpass 12, Bandpass 13, Bandpass 15 und Tiefpass 17) sichergestellt, dass das Antennenkabel 3 für verschiedene Zwecke durch ein Nutzsignal und mehrere aufmodulierte Steuer-, Diagnose- bzw. Energieversorgungssignale, genutzt werden kann. So gewährleistet beispielsweise der Hochpass 12, dass nur Signale im Bereich größer 1 Gigahertz über das Antennenkabel 3 übertragen werden können. Der Bandpass 13 stellt sicher, dass nur Signale im Bereich um 433 Megahertz auf das Antennenkabel aufmoduliert werden können. Ebenso ist durch den Bandpass 15 sichergestellt, dass nur Signale im Bereich um 20 Megahertz passieren können. Schließlich stellt der Tiefpass 17 sicher, dass nur Signale deutlich unter 40 Megahertz über das Antennenkabel 3 zu der Stromversorgung 18 gelangen können. Der Vollständigkeit halber sei erwähnt, dass die genannten Frequenzangaben, die auch in der Figur eingezeichnet sind, lediglich beispielhaft sind und den verwendeten Frequenzen für Nutz- und Steuersignale angepasst werden können.

Als weitere Option kann die Steuereinheit 5 eine Funktion BLE (Bluetooth Low Energy) bieten. Das bedeutet, dass die Versorgung für die Stromversorgung 18 nicht nur über das Antennenkabel 3, sondern zusätzlich oder auch alleine über einen Stromversorgungspfad 19 erfolgen kann.

Bezüglich der Steuereinheit 5 ist noch zu erwähnen, dass diese gemäß dem Ausführungsbeispiel einen General Purpose Input/Output (GPIO), einen Analog-Digital-Umsetzer (ADC), ein Serial Peripheral Interface (SPI) und eine Interrupt-Schnittstelle (INTO) aufweist. Über diese Interrupt-Schnittstelle werden von der Steuereinheit 5 Interrupts zum Beispiel dann ausgelöst, wenn sich der an einem bestimmten Eingang der Steuereinheit 5 anliegende Wert von high auf low ändert (oder umgekehrt), eine vorher festgelegt Zeitspanne abgelaufen ist oder eine serielle Übertragung abgeschlossen ist.

### Bezugszeichenliste

1. Antenneneinrichtung
2. Antenne
3. Antennenkabel
4. Elektronisches Gerät
5. Steuereinheit
6. Schalteinheit
7. Schalteinheit
8. Empfangspfad
9. Sendepfad
10. Rauscharmer Verstärker
11. Leistungsverstärker
12. Hochpass
13. Bandpass
14. Sende-Empfangseinheit
15. Bandpass
16. Frequenzerfassungseinheit
17. Tiefpass
18. Stromversorgung
19. Stromversorgungspfad

## Patentansprüche

1. Antenneneinrichtung (1) zur Fahrzeug-zu-Fahrzeug (C2C) oder Fahrzeug-zu-X (C2X) Kommunikation, aufweisend eine Antenne (2), wobei die Antenne (2) über ein Antennenkabel (3) mit einem elektronischen Gerät (4) verbindbar ist und über das Antennenkabel (3) hochfrequente Signale zwischen dem elektronischen Gerät (4) und der Antenne (2) und umgekehrt übertragen werden können, wobei die Antenneneinrichtung (1) eine Steuereinheit (5) sowie Schalteinheiten (6, 7), die von der Steuereinheit (5) angesteuert werden, aufweist, wobei mittels der Schalteinheiten (6, 7) zwischen einem Empfangspfad (8) und einem Sendepfad (9) zwischen dem elektronischen Gerät (4) und der Antenne (2) umgeschaltet wird, wobei in dem Empfangspfad (8) ein erster Verstärker (10) und in dem Sendepfad ein zweiter Verstärker (11) angeordnet ist, wobei an der Steuereinheit (5) eine Sende-Empfangseinheit (14) angeschlossen ist, die ausgangsseitig mit dem Antennenkabel (3) verbindbar ist, wobei ausgelöst von dem elektronischen Gerät (4) ein Signal auf das Antennenkabel (3) aufmodulierbar ist, wobei das Signal an die Steuereinheit (5) über die Sende-Empfangseinheit (14) übertragen wird und die Steuereinheit (5) dazu veranlasst wird, über die Sende-Empfangseinheit (14) ein weiteres Signal auf dem Antennenkabel (3) aufzumodulieren, wobei das weitere Signal dann über den Sendepfad (9) an die Antenne (2) abgegeben wird, wobei die Steuereinheit (5) in der Lage ist, das die Sende-Empfangseinheit (14) verlassende weitere Signal über den Sendepfad (9) an die Antenne (2) zu senden, indem die Schalteinheiten (6, 7) derart betätigt werden, dass der Sendepfad (9) und nicht der Empfangspfad (8) durchgeschaltet wird, wobei an der Steuereinheit (5) eine Frequenzerfassungseinheit (16) angeschlossen ist, wobei die Frequenzerfassungseinheit (16) ausgangsseitig mit dem Antennenkabel (3) verbunden ist, wobei mittels der Frequenzerfassungseinheit (16) Steuersignale des elektronischen Gerätes (4), die auf das Antennenkabel (3) aufmoduliert worden sind, erfasst und ein Steuerimpuls an die Steuereinheit (5) abgegeben wird, wobei der Steuerimpuls die Steuereinheit (5) veranlasst, die Schalteinheiten (6,7) zu betätigen, um zwischen Sende- und Empfangspfad (9, 8) umzuschalten, wobei mittels der Frequenzerfassungseinheit (16) Steuersignale erzeugt bzw. erfasst werden, um in Abhängigkeit von auslösenden Ereignissen in dem elektronischen Gerät (4) bzw. der Antenneneinrichtung (1) die Schalteinheiten (6, 7) zu betätigen, die zwischen Sende- und Empfangspfad (9, 8) umschalten, wobei die auslösenden Ereignisse solche sind, dass das elektronische Gerät (4) ein Steuersignal auf das Antennenkabel (3) aufmoduliert, wobei das Steuersignal der Steuereinheit (5) die Information gibt, auf den Sendepfad (9) umzuschalten, weil von dem elektronischen Gerät (4) hochfrequente Signale über das Antennenkabel (3) an die Antenne (2) zur dortigen Abstrahlung übertragen werden, wobei gleiches auch für den Fall gilt, dass mittels der Antenneneinrichtung (1) von der Antenne (2) empfangene hochfrequente Signale über den Empfangspfad (8) und das Antennenkabel (3) an das elektronische Gerät (4) übertragen werden.

2. Antenneneinrichtung (1) nach Anspruch 1, **dadurch gekennzeichnet, dass** der in dem Empfangspfad (8) angeordnete erste Verstärker (10) ein rauscharmer Verstärker ist, und der in dem Sendepfad angeordnete zweite Verstärker (11) ein Leistungsverstärker ist.

3. Antenneneinrichtung (1) nach Anspruch 1 oder 2, **dadurch gekennzeichnet, dass** an der Steuereinheit (5) eine Stromversorgung (18) angeschlossen ist, die ausgangsseitig mit dem Antennenkabel (3) verbunden ist.

4. Verfahren zum Betreiben einer Antenneneinrichtung (1), aufweisend eine Antenne (2), wobei die Antenne (2) über ein Antennenkabel (3) mit einem elektronischen Gerät (4) verbunden ist und über das Antennenkabel (3) hochfrequente Signale zwischen dem elektronischen Gerät (4) und der Antenne (2) und umgekehrt übertragen werden, wobei eine Steuereinheit (5) der Antenneneinrichtung (1) Schalteinheiten (6, 7) ansteuert, wobei mittels der Schalteinheiten (6, 7) zwischen einem Empfangspfad (8) und einem Sendepfad (9) zwischen dem elektronischen Gerät (4) und der Antenne (2) umgeschaltet wird, wobei die Antenneneinrichtung (1) eine Steuereinheit (5) sowie Schalteinheiten (6, 7), die von der Steuereinheit (5) angesteuert werden, aufweist, wobei mittels der Schalteinheiten (6, 7) zwischen einem Empfangspfad (8) und einem Sendepfad (9) zwischen dem elektronischen Gerät (4) und der Antenne (2) umgeschaltet wird, wobei in dem Empfangspfad (8) ein erster Verstärker (10) und in dem Sendepfad ein zweiter Verstärker (11) angeordnet ist, wobei an der Steuereinheit (5) eine Sende-Empfangseinheit (14) angeschlossen ist, die ausgangsseitig mit dem Antennenkabel (3) verbunden ist, wobei ausgelöst von dem elektronischen Gerät (4) ein Signal auf das Antennenkabel (3) aufmoduliert wird, wobei das Signal an die Steuereinheit (5) über die Sende-Empfangseinheit (14) übertragen wird und die Steuereinheit (5) dazu veranlasst wird, über die Sende-Empfangseinheit (14) ein weiteres Signal auf dem Antennenkabel (3) aufzumodulieren, wobei das weitere Signal dann über den Sendepfad (9) an die Antenne (2) abgegeben wird, wobei die Steuereinheit (5) in der Lage ist, das die Sende-Empfangseinheit (14) verlassende weitere Signal über den Sendepfad (9) an die Antenne (2) zu senden, indem die Schalteinheiten (6, 7) derart betätigt werden, dass der Sendepfad (9) und nicht der Empfangspfad (8) durchgeschaltet wird, wobei an der Steuereinheit (5) eine Frequenzerfassungseinheit (16) angeschlossen ist, wobei die Frequenzerfassungseinheit (16) ausgangsseitig mit dem Antennenkabel (3) verbunden ist, wobei mittels der Frequenzerfassungseinheit (16) Steuersignale des elektronischen Gerätes (4), die auf das Antennenkabel (3) aufmoduliert worden sind, erfasst und ein Steuerimpuls an die Steuereinheit (5) abgegeben wird, wobei der Steuerimpuls die Steuereinheit (5) veranlasst, die Schalteinheiten (6,7) zu betätigen, um zwischen Sende- und Empfangspfad (9, 8) umzuschalten, wobei mittels der Frequenzerfassungseinheit (16) Steuersignale erzeugt bzw. erfasst werden, um in Abhängigkeit von auslösenden Ereignissen in dem elektronischen Gerät (4) bzw. der Antenneneinrichtung (1) die Schalteinheiten (6, 7) zu betätigen, die zwischen Sende- und Empfangspfad (9, 8) umschalten, wobei die auslösenden Ereignisse solche sind, dass das elektronische Gerät (4) ein Steuersignal auf das Antennenkabel (3) aufmoduliert, wobei das Steuersignal der Steuereinheit (5) die Information gibt, auf den Sendepfad (9) umzuschalten, weil von dem elektronischen Gerät (4) hochfrequente Signale über das Antennenkabel (3) an die Antenne (2) zur dortigen Abstrahlung übertragen werden, wobei gleiches auch für den Fall gilt, dass mittels der Antenneneinrichtung (1) von der Antenne (2) empfangene hochfrequente Signale über den Empfangspfad (8) und das Antennenkabel (3) an das elektronische Gerät (4) übertragen werden.

5. Verfahren nach Anspruch 4, **dadurch gekennzeichnet, dass** der in dem Empfangspfad (8) angeordnete erste Verstärker (10) ein rauscharmer Verstärker ist, der in dem Sendepfad angeordnete zweite Verstärker (11) ein Leistungsverstärker ist, und beide Verstärker (10, 11) von der Steuereinheit (5) angesteuert werden.

6. Verfahren nach einem der Ansprüche 4 oder 5, **dadurch gekennzeichnet, dass** eine Stromversorgung der Antenneneinrichtung (1) über das Antennenkabel (3) erfolgt.

## Claims

1. Antenna device (1) for vehicle-to-vehicle (C2C) or vehicle-to-X (C2X) communication, having an antenna (2), wherein the antenna (2) can be connected to an electronic device (4) via an antenna cable (3) and radio-frequency signals can be transmitted between the electronic device (4) and the antenna (2) and vice versa via the antenna cable (3), wherein the antenna device (1) has a control unit (5) and switching units (6, 7) which are controlled by the control unit (5), wherein the switching units (6, 7) are used to switch between a receive path (8) and a transmit path (9) between the electronic device (4) and the antenna (2), wherein a first amplifier (10) is arranged in the receive path (8) and a second amplifier (11) is arranged in the transmit path, wherein a transceiving unit (14) is connected to the control unit (5) and can be connected, on the output side, to the antenna cable (3), wherein a signal can be modulated onto the antenna cable (3) in a manner triggered by the electronic device (4), wherein the signal is transmitted to the control unit (5) via the transceiving unit (14), and the control unit (5) is prompted to modulate a further signal on the antenna cable (3) via the transceiving unit (14), wherein the further signal is then emitted to the antenna (2) via the transmit path (9), wherein the control unit (5) is able to transmit the further signal leaving the transceiving unit (14) to the antenna (2) via the transmit path (9) by actuating the switching units (6, 7) in such a manner that the transmit path (9), rather than the receive path (8), is connected, wherein a frequency detection unit (16) is connected to the control unit (5), wherein the frequency detection unit (16) is connected, on the output side, to the antenna cable (3), wherein control signals from the electronic device (4) which have been modulated onto the antenna cable (3) are detected using the frequency detection unit (16) and a control pulse is emitted to the control unit (5), wherein the control pulse prompts the control unit (5) to actuate the switching units (6, 7) to switch between the transmit and receive paths (9, 8), wherein control signals are generated or detected using the frequency detection unit (16) in order to actuate the switching units (6, 7) to switch between the transmit and receive paths (9, 8) on the basis of triggering events in the electronic device (4) or the antenna device (1), wherein the triggering events are those in which the electronic device (4) modulates a control signal onto the antenna cable (3), wherein the control signal from the control unit (5) provides the information to switch to the transmit path (9) because radio-frequency signals are being transmitted from the electronic device (4), via the antenna cable (3), to the antenna (2) for emission there, wherein the same also applies to the situation in which radio-frequency signals received by the antenna (2) using the antenna device (1) are transmitted to the electronic device (4) via the receive path (8) and the antenna cable (3) .

2. Antenna device (1) according to Claim 1, **characterized in that** the first amplifier (10) arranged in the receive path (8) is a low-noise amplifier, and the second amplifier (11) arranged in the transmit path is a power amplifier.

3. Antenna device (1) according to Claim 1 or 2, **characterized in that** a power supply (18) is connected to the control unit (5) and is connected, on the output side, to the antenna cable (3).

4. Method for operating an antenna device (1) having an antenna (2), wherein the antenna (2) is connected to an electronic device (4) via an antenna cable (3) and radio-frequency signals are transmitted between the electronic device (4) and the antenna (2) and vice versa via the antenna cable (3), wherein a control unit (5) of the antenna device (1) controls switching units (6, 7), wherein the switching units (6, 7) are used to switch between a receive path (8) and a transmit path (9) between the electronic device (4) and the antenna (2), wherein the antenna device (1) has a control unit (5) and switching units (6, 7) which are controlled by the control unit (5), wherein the switching units (6, 7) are used to switch between a receive path (8) and a transmit path (9) between the electronic device (4) and the antenna (2), wherein a first amplifier (10) is arranged in the receive path (8) and a second amplifier (11) is arranged in the transmit path, wherein a transceiving unit (14) is connected to the control unit (5) and is connected, on the output side, to the antenna cable (3), wherein a signal is modulated onto the antenna cable (3) in a manner triggered by the electronic device (4), wherein the signal is transmitted to the control unit (5) via the transceiving unit (14), and the control unit (5) is prompted to modulate a further signal on the antenna cable (3) via the transceiving unit (14), wherein the further signal is then emitted to the antenna (2) via the transmit path (9), wherein the control unit (5) is able to transmit the further signal leaving the transceiving unit (14) to the antenna (2) via the transmit path (9) by actuating the switching units (6, 7) in such a manner that the transmit path (9), rather than the receive path (8), is connected, wherein a frequency detection unit (16) is connected to the control unit (5), wherein the frequency detection unit (16) is connected, on the output side, to the antenna cable (3), wherein control signals from the electronic device (4) which have been modulated onto the antenna cable (3) are detected using the frequency detection unit (16) and a control pulse is emitted to the control unit (5), wherein the control pulse prompts the control unit (5) to actuate the switching units (6, 7) to switch between the transmit and receive paths (9, 8), wherein control signals are generated or detected using the frequency detection unit (16) in order to actuate the switching units (6, 7) to switch between the transmit and receive paths (9, 8) on the basis of triggering events in the electronic device (4) or the antenna device (1), wherein the triggering events are those in which the electronic device (4) modulates a control signal onto the antenna cable (3), wherein the control signal from the control unit (5) provides the information to switch to the transmit path (9) because radio-frequency signals are being transmitted from the electronic device (4), via the antenna cable (3), to the antenna (2) for emission there, wherein the same also applies to the situation in which radio-frequency signals received by the antenna (2) using the antenna device (1) are transmitted to the electronic device (4) via the receive path (8) and the antenna cable (3) .

5. Method according to Claim 4, **characterized in that** the first amplifier (10) arranged in the receive path (8) is a low-noise amplifier, and the second amplifier (11) arranged in the transmit path is a power amplifier, and both amplifiers (10, 11) are controlled by the control unit (5).

6. Method according to either of Claims 4 and 5, **characterized in that** the antenna device (1) is supplied with power via the antenna cable (3).

## Revendications

1. Dispositif d'antenne (1) pour une communication de véhicule à véhicule (C2C) ou de véhicule à X (C2X), possédant une antenne (2), l'antenne (2) pouvant être connectée à un appareil électronique (4) par le biais d'un câble d'antenne (3) et des signaux à haute fréquence pouvant être transmis par le biais du câble d'antenne (3) entre l'appareil électronique (4) et l'antenne (2) et inversement, le dispositif d'antenne (1) possédant une unité de commande (5) ainsi que des unités de commutation (6, 7), lesquelles sont commandées par l'unité de commande (5), une permutation entre un trajet de réception (8) et un trajet d'émission (9) entre l'appareil électronique (4) et l'antenne (2) étant effectuée au moyen des unités de commutation (6, 7), un premier amplificateur (10) étant disposé dans le trajet de réception (8) et un deuxième amplificateur (11) étant disposé dans le trajet d'émission, une unité d'émission/réception (14) étant raccordée à l'unité de commande (5) qui, du côté de la sortie, peut être connectée au câble d'antenne (3), un signal pouvant être superposé par modulation sur le câble d'antenne (3) sur déclenchement par l'appareil électronique (4), le signal étant transmis à l'unité de commande (5) par le biais de l'unité d'émission/réception (14) et l'unité de commande (5) étant amenée à superposer par modulation un signal supplémentaire sur le câble d'antenne (3) par le biais de l'unité d'émission/réception (14), le signal supplémentaire étant alors délivré à l'antenne (2) par le biais du trajet d'émission (9), l'unité de commande étant en mesure d'émettre vers l'antenne (2) par le biais du trajet d'émission (9) le signal supplémentaire qui quitte l'unité d'émission/réception (14) en actionnant les unités de commutation (6, 7) de telle sorte que le trajet d'émission (9) et non le trajet de réception (8) soit commuté à l'état passant, une unité de détection de fréquence (16) étant raccordée à l'unité de commande (5), l'unité de détection de fréquence (16) étant raccordée du côté de la sortie au câble d'antenne (3), l'unité de détection de fréquence (16) étant utilisée pour détecter les signaux de commande de l'appareil électronique (4) qui ont été superposés par modulation sur le câble d'antenne (3) et à délivrer une impulsion de commande à l'unité de commande (5), l'impulsion de commande amenant l'unité de commande (5) à actionner les unités de commutation (6, 7) afin de permuter entre le trajet d'émission et de réception (9, 8), des signaux de commande étant générés ou détectés au moyen de l'unité de détection de fréquence (16) afin d'actionner les unités de commutation (6, 7), qui permutent entre le trajet d'émission et de réception (9, 8), en fonction d'événements déclencheurs dans l'appareil électronique (4) ou le dispositif d'antenne (1), les événements déclencheurs étant ceux qui font que l'appareil électronique (4) superpose par modulation un signal de commande sur le câble d'antenne (3), le signal de commande donnant à l'unité de commande (5) l'information de permuter sur le trajet d'émission (9) car des signaux à haute fréquence sont transmis par le biais du câble d'antenne (3) de l'appareil électronique (4) à l'antenne (2) en vue d'y être rayonnés, la même chose s'appliquant également pour le cas où des signaux à haute fréquence reçus par l'antenne (2) au moyen du dispositif d'antenne (1) sont transmis à l'appareil électronique (4) par le biais du trajet de réception (8) et du câble d'antenne (3) .

2. Dispositif d'antenne (1) selon la revendication 1, **caractérisé en ce que** le premier amplificateur (10) disposé dans le trajet de réception (8) est un amplificateur à faible bruit et le deuxième amplificateur (11) disposé dans le trajet d'émission est un amplificateur de puissance.

3. Dispositif d'antenne (1) selon la revendication 1 ou 2, **caractérisé en ce qu'**une alimentation électrique (18) est raccordée à l'unité de commande (5), laquelle est reliée par le côté de la sortie au câble d'antenne (3) .

4. Procédé pour faire fonctionner un dispositif d'antenne (1), possédant une antenne (2), l'antenne (2) pouvant être connectée à un appareil électronique (4) par le biais d'un câble d'antenne (3) et des signaux à haute fréquence pouvant être transmis par le biais du câble d'antenne (3) entre l'appareil électronique (4) et l'antenne (2) et inversement, une unité de commande (5) du dispositif d'antenne (1) commandant des unités de commutation (6, 7), une permutation entre un trajet de réception (8) et un trajet d'émission (9) entre l'appareil électronique (4) et l'antenne (2) étant effectuée au moyen des unités de commutation (6, 7), le dispositif d'antenne (1) possédant une unité de commande (5) ainsi que des unités de commutation (6, 7) qui sont commandées par l'unité de commande (5), une permutation entre un trajet de réception (8) et un trajet d'émission (9) entre l'appareil électronique (4) et l'antenne (2) étant effectuée au moyen des unités de commutation (6, 7), un premier amplificateur (10) étant disposé dans le trajet de réception (8) et un deuxième amplificateur (11) dans le trajet d'émission, une unité d'émission/réception (14) étant raccordée à l'unité de commande (5) qui, du côté de la sortie, est connectée au câble d'antenne (3), un signal étant superposé par modulation sur le câble d'antenne (3) sur déclenchement par l'appareil électronique (4), le signal étant transmis à l'unité de commande (5) par le biais de l'unité d'émission/réception (14) et l'unité de commande (5) étant amenée à superposer par modulation un signal supplémentaire sur le câble d'antenne (3) par le biais de l'unité d'émission/réception (14), le signal supplémentaire étant alors délivré à l'antenne (2) par le biais du trajet d'émission (9), l'unité de commande étant en mesure d'émettre vers l'antenne (2) par le biais du trajet d'émission (9) le signal supplémentaire qui quitte l'unité d'émission/réception (14) en actionnant les unités de commutation (6, 7) de telle sorte que le trajet d'émission (9) et non le trajet de réception (8) soit commuté à l'état passant, une unité de détection de fréquence (16) étant raccordée à l'unité de commande (5), l'unité de détection de fréquence (16) étant raccordée du côté de la sortie au câble d'antenne (3), l'unité de détection de fréquence (16) étant utilisée pour détecter les signaux de commande de l'appareil électronique (4) qui ont été superposés par modulation sur le câble d'antenne (3) et à délivrer une impulsion de commande à l'unité de commande (5), l'impulsion de commande amenant à l'unité de commande (5) à actionner les unités de commutation (6, 7) afin de permuter entre le trajet d'émission et de réception (9, 8), des signaux de commande étant générés ou détectés au moyen de l'unité de détection de fréquence (16) afin d'actionner les unités de commutation (6, 7), qui permutent entre le trajet d'émission et de réception (9, 8), en fonction d'événements déclencheurs dans l'appareil électronique (4) ou le dispositif d'antenne (1), les événements déclencheurs étant ceux qui font que l'appareil électronique (4) superpose par modulation un signal de commande sur le câble d'antenne (3), le signal de commande donnant à l'unité de commande (5) l'information de permuter sur le trajet d'émission (9) car des signaux à haute fréquence sont transmis par le biais du câble d'antenne (3) de l'appareil électronique (4) à l'antenne (2) en vue d'y être rayonnés, la même chose s'appliquant également pour le cas où des signaux à haute fréquence reçus par l'antenne (2) au moyen du dispositif d'antenne (1) sont transmis à l'appareil électronique (4) par le biais du trajet de réception (8) et du câble d'antenne (3) .

5. Procédé selon la revendication 4, **caractérisé en ce que** le premier amplificateur (10) disposé dans le trajet de réception (8) est un amplificateur à faible bruit et le deuxième amplificateur (11) disposé dans le trajet d'émission est un amplificateur de puissance et les deux amplificateurs (10, 11) sont commandés par l'unité de commande (5).

6. Procédé selon l'une des revendications 4 ou 5, **caractérisé en ce qu'**une alimentation électrique du dispositif d'antenne (1) s'effectue par le biais du câble d'antenne (3).
